# EUROPÄISCHE PATENTSCHRIFT

(11) **EP 3 759 329 B1**
(45) Veröffentlichungstag und Bekanntmachung des Hinweises auf die Patenterteilung: **30.03.2022**
(21) Anmeldenummer: 19702387.2
(22) Anmeldetag: 28.01.2019
(51) Int. Cl.: F02B 37/16, F02M 35/10, F02B 37/00, F02C 6/12, F02M 25/08, F04F 5/20, F04D 29/40

(54) **VERDICHTERANORDNUNG FÜR EINE BRENNKRAFTMASCHINE SOWIE VERFAHREN ZUM BETREIBEN EINER VERDICHTERANORDNUNG**
COMPRESSOR ARRANGEMENT FOR AN INTERNAL COMBUSTION ENGINE AND METHOD OF OPERATING AN COMPRESSOR ARRANGEMENT
AGENCEMENT DE COMPRESSEUR POUR UN MOTEUR À COMBUSTION INTERNE ET PROCÉDÉ DE FONCTIONNEMENT D'UN AGENCEMENT DE COMPRESSEUR

(30) Priorität: 26.02.2018 DE 102018202845
(43) Veröffentlichungstag der Anmeldung: 06.01.2021
(73) Patentinhaber: Audi AG, 85045 Ingolstadt (DE)
(72) Erfinder: KÖHNLEIN, Maximilian, 85139 Wettstetten (DE); SOLBECK, Robert, 85080 Gaimersheim (DE)
(86) Internationale Anmeldenummer: PCT/EP2019/051992
(87) Internationale Veröffentlichungsnummer: WO 2019/162044

(56) Entgegenhaltungen:
- DE-A1-102011 104 424
- DE-A1-102017 204 785
- JP-A- 2015 187 438
- US-A1- 2008 267 765
- US-A1- 2016 305 377
- US-A1- 2016 377 038

## Beschreibung

Die Erfindung betrifft eine Verdichteranordnung für eine Brennkraftmaschine, mit einem in einem Verdichtergehäuse angeordneten, eine Niederdruckseite und eine Hochdruckseite aufweisenden Verdichter und mit einer Unterdruckbereitstellungseinrichtung, die einen einerseits über einen Treibmitteleinlassanschluss an die Hochdruckseite des Verdichters und andererseits über einen Treibmittelauslassanschluss an die Niederdruckseite des Verdichters strömungstechnisch angeschlossenen Treibmittelkanal mit einer Düse und einen strömungstechnisch zwischen dem Treibmitteleinlassanschluss und dem Treibmittelauslassanschluss in den Treibmittelkanal einmündenden Unterdruckkanal aufweist, wobei der Treibmittelkanal in einem von dem Verdichtergehäuse separaten Gehäuse ausgebildet ist, an dem der Treibmitteleinlassanschluss mit einem ersten Anschluss und der Treibmittelauslassanschluss mit einem zweiten Anschluss ausgebildet sind, wobei der erste Anschluss und der zweite Anschluss an dem Verdichtergehäuse ausgebildet sind, wobei das Gehäuse zur unmittelbaren Befestigung an dem Verdichtergehäuse ausgebildet ist. Die Erfindung betrifft weiterhin ein Verfahren zum Betreiben einer Verdichteranordnung.

Aus dem Stand der Technik ist beispielsweise die Druckschrift DE 20 2014 105 108 U1 bekannt. Diese beschreibt ein Motorsystem, das Folgendes umfasst: eine erste und eine zweite Saugvorrichtung, die jeweils eine Soganzapfung in einer Verengung der Saugvorrichtung, eine Soganzapfung in einem Aufweitungskegel der Saugvorrichtung und eine Soganzapfung in einer geraden Röhre, stromabwärts von dem Aufweitungskegel, umfassen, wobei die erste Saugvorrichtung einen mit einer Motoransaugung verbundenen Antriebseinlass und einen mit der Ansaugung stromabwärts von einer Hauptdrossel verbundenen Gemischströmungsauslass umfasst, und wobei die zweite Saugvorrichtung einen mit der Ansaugung stromabwärts von dem Antriebseinlass der ersten Saugvorrichtung verbundenen Gemischströmungsauslass und einen mit der Ansaugung stromabwärts von der Hauptdrossel verbundenen Antriebseinlass umfasst.

Aus dem Stand der Technik ist beispielsweise die Druckschrift DE 10 2017 204 785 A1 bekannt. Diese beschreibt ein Venturimodul für ein Verdichtergehäuse zur Verwendung mit einem Tankentlüftungssystem mit einer ersten Öffnung zur Koppelung mit einem ersten Kanalabschnitt eines Verbindungskanals von einem Hochdruckbereich zu einem Niederdruckbereich eines Verdichtergehäuses, einer zweiten Öffnung zu Koppelung mit einem zweiten Kanalabschnitt des Verbindungskanals, einem Durchgang zwischen der ersten Öffnung und der zweiten Öffnung im Inneren des Venturimoduls in Form einer Venturidüse und einem Abnahmerohr in Form eines Anschlussstutzens zur Koppelung des Venturimoduls mit einem Tankentlüftungssystems. Das Venturimodul ist als ein integrales Bauteil ausgestaltet und weist außerdem einen Flansch zur Befestigung des Venturimoduls an einem Verdichtergehäuse auf. Es wird zudem ein Verdichtergehäuse für einen Verdichter eines Turboladers beschrieben, mit einem Niederdruckbereich, einem Hochdruckbereich, und einem Verbindungskanal von dem Niederdruckbereich zu dem Hochdruckbereich, wobei der Verbindungskanal eine zur Umgebung offene Aussparung zur Aufnahme eines Venturimoduls aufweist.

Die Druckschrift JP 2015-187438 A beschreibt eine Vorrichtung zum Abführen von Treibstoffdampf aus einem Treibstoffbehälter. Dabei ist in einen Einlassanschluss eines Verdichters eine Abführvorrichtung integriert, wobei die Abführeinrichtung über eine Strömungsverbindung einen Teil der Ladeluft stromabwärts des Verdichters entnimmt und der Treibstoffdampf aus dem Treibstoffbehälter dem Verdichter zugeführt wird.

Weiterhin sind aus dem Stand der Technik die Druckschriften US 9,086,036 B2, US 2008/267765 A1, DE 10 2011 104 785 A1, US 2016/305377 A1 und US 2016/377038 A1 bekannt.

Dies wird erfindungsgemäß mit einer Verdichteranordnung für eine Brennkraftmaschine mit den Merkmalen des Anspruchs 1 erreicht. Dabei ist vorgesehen, dass lediglich der Treibmittelauslassanschluss als Steckanschluss ausgebildet ist, wobei der Treibmittelauslassanschluss einen Steckverbindungsvorsprung und der zweite Anschluss eine Steckverbindungsaufnahme zur Aufnahme des Steckverbindungsvorsprungs aufweist, und dass der Treibmitteleinlassanschluss und der erste Anschluss jeweils eine eine Anlagefläche durchgreifende Durchtrittsöffnung aufweisen, sodass eine Strömungsverbindung zwischen dem Treibmitteleinlassanschluss und dem ersten Anschluss durch planes Anlegen der Anlageflächen aneinander herstellbar ist.

Grundsätzlich ist vorgesehen, dass der erste Anschluss und der zweite Anschluss an dem Verdichtergehäuse ausgebildet sind, wobei das Gehäuse zur unmittelbaren Befestigung an dem Verdichtergehäuse ausgebildet ist.

Grundsätzlich ist vorgesehen, dass der Treibmittelkanal in einem von dem Verdichtergehäuse separaten Gehäuse ausgebildet ist, an dem der Treibmitteleinlassanschluss und/oder der Treibmittelauslassanschluss als Steckanschluss ausgebildet sind/ist, wobei das Gehäuse zur unmittelbaren Befestigung an dem Verdichtergehäuse ausgebildet ist. Die Verdichteranordnung kann der Brennkraftmaschine zugeordnet und insoweit Bestandteil der Brennkraftmaschine sein. Sie dient bevorzugt der Bereitstellung von verdichtetem Frischgas für die Brennkraftmaschine. Die Verdichteranordnung weist hierzu den Verdichter auf, welchem auf der Niederdruckseite Frischgas bei einem ersten Druck bereitgestellt wird. Der Verdichter verdichtet das bereitgestellte Frischgas und stellt es wiederum auf der Hochdruckseite für die Brennkraftmaschine bereit, nämlich bei einem zweiten Druck, welcher höher ist als der erste Druck. Das Frischgas kann in Form von Frischluft, jedoch auch als Frischluft-Abgas-Gemisch vorliegen. In letzterem Fall ist die Brennkraftmaschine beispielsweise mit einer externen Abgasrückführung ausgestattet. Der Verdichter beziehungsweise die Verdichteranordnung kann beispielsweise Bestandteil eines Abgasturboladers sein, welcher der Brennkraftmaschine zugeordnet ist.

Die Verdichteranordnung verfügt zusätzlich zu dem Verdichter über die Unterdruckbereitstellungseinrichtung, mittels welcher Unterdruck für einen Unterdruckverbraucher bereitgestellt werden kann beziehungsweise bereitgestellt wird. Der Unterdruckverbraucher liegt beispielsweise in Form einer Spüleinrichtung für einen Filter, insbesondere für einen Aktivkohlefilter, und/oder als Entlüftungseinrichtung, insbesondere als Kurbelgehäuseentlüftungseinrichtung vor.

Die Unterdruckbereitstellungseinrichtung verfügt über den Treibmittelkanal, über welchen zur Unterdruckbereitstellung ein Treibmittel geführt werden kann. Als Treibmittel für die Unterdruckbereitstellung wird das mittels des Verdichters verdichtete Frischgas verwendet. Hierzu ist der Treibmittelkanal einerseits an die Hochdruckseite des Verdichters und andererseits an die Niederdruckseite des Verdichters strömungstechnisch angeschlossen. Zum Anschließen des Treibmittelkanals an die Hochdruckseite verfügt die Unterdruckbereitstellungseinrichtung über den Treibmitteleinlassanschluss und zum Anschließen an die Niederdruckseite über den Treibmittelauslassanschluss.

Die Unterdruckbereitstellungseinrichtung, insbesondere der Treibmittelkanal, stellt einen Bypass für den Verdichter dar, über welchen bereits verdichtetes Frischgas von der Hochdruckseite zurück auf die Niederdruckseite geführt werden kann beziehungsweise geführt wird. Zum Bereitstellen des Unterdrucks mündet der Unterdruckkanal in den Treibmittelkanal ein. In dem Unterdruckkanal beziehungsweise an einem Unterdruckanschluss der Unterdruckbereitstellungseinrichtung, welche auf der dem Treibmittelkanal abgewandten Seite des Unterdruckkanals vorliegt, wird der Unterdruck bei einer Durchströmung des Treibmittelkanals mit Treibmittel beziehungsweise Frischgas bereitgestellt.

Zur Bereitstellung des Unterdrucks ist in dem Treibmittelkanal die Düse angeordnet. Über die Düse ist der Treibmitteleinlassanschluss mit dem Treibmittelauslassanschluss strömungsverbunden. Der Unterdruckkanal mündet beispielsweise in die Düse oder stromabwärts der Düse, insbesondere unmittelbar stromabwärts der Düse, in den Treibmittelkanal ein. In ersterem Fall liegt die Düse in Form einer Venturi-Düse vor, bei welcher der Venturi-Effekt ausgenutzt wird, um aufgrund des den Treibmittelkanal durchströmenden Treibmittels den Unterdruck in dem Unterdruckkanal und mithin an dem Unterdruckanschluss bereitzustellen.

Im Falle der Venturi-Düse stellt die Düse eine Querschnittsverringerung dar, in welche der Treibmittelkanal einmündet. Besonders bevorzugt ist eine kontinuierliche Querschnittsverringerung bis hin zu einem kleinsten Durchströmungsquerschnitt ausgebildet, an welchen sich eine kontinuierliche Vergrößerung des Durchströmungsquerschnitts, also eine Verkleinerung der Querschnittsverringerung, anschließt. Der Treibmittelkanal mündet bevorzugt im Bereich des kleinsten Durchströmungsquerschnitts, zumindest jedoch im Bereich der Querschnittsverringerung, in die Düse ein.

Mündet der Treibmittelkanal stromabwärts der Düse in den Treibmittelkanal ein, so liegt die Düse als Treibstrahldüse einer Strahlpumpe beziehungsweise Treibstrahlpumpe, vor. Im Falle der Strahlpumpe mündet die Treibstrahldüse in eine Mischkammer ein, welche einen größeren Durchströmungsquerschnitt aufweist als eine Austrittsöffnung der Düse, über welche die Düse an die Mischkammer angeschlossen ist. Insoweit liegt im Falle der Treibstrahldüse eine plötzliche Aufweitung des Durchströmungsquerschnitts vor. Der Unterdruckkanal mündet ebenfalls in die Mischkammer ein, sodass bei einer Durchströmung des Treibmittelkanals mit Treibmittel das in dem Unterdruckkanal vorliegende Fluid von dem Treibmittel in Richtung des Treibmittelauslassanschlusses mitgenommen wird, insbesondere durch Impulseintrag.

Der Treibmittelkanal und mithin die Düse sind in dem Gehäuse angeordnet, welches separat von dem Verdichtergehäuse vorliegt beziehungsweise ausgebildet ist. Das Gehäuse, welches Bestandteil der Unterdruckbereitstellungseinrichtung ist, ist an dem Verdichtergehäuse montierbar. Vor einem Betrieb der Verdichteranordnung ist insoweit - soweit das Bereitstellen von Unterdruck gewünscht ist - das Gehäuse der Unterdruckbereitstellungseinrichtung derart anzuordnen, dass der Treibmittelkanal einerseits mit der Hochdruckseite und andererseits mit der Niederdruckseite des Verdichters strömungsverbunden ist.

Das Ausbilden des Treibmittelkanals in dem separaten Gehäuse, welches einteilig oder mehrteilig ausgebildet sein kann, hat den Vorteil, dass eine einfache Austauschbarkeit der Unterdruckbereitstellungseinrichtung gegeben ist. Zudem kann die Unterdruckbereitstellungseinrichtung besonders effizient montiert werden, insbesondere falls die Unterdruckbereitstellungseinrichtung vollständig in dem Gehäuse ausgebildet ist. In diesem Fall sind zusätzlich zu dem Treibmittelkanal die Düse und der Unterdruckkanal in dem Gehäuse ausgebildet.

Vorzugsweise ist wenigstens ein Bereich des Treibmittelkanals, in welchem die Düse angeordnet ist, sowie der Unterdruckkanal, in einem einstückig und/oder materialeinheitlich ausgeführten Teil des Gehäuses angeordnet. Hierbei werden sowohl der Bereich des Treibmittelkanals als auch die Düse und der Unterdruckkanal von einer Ausnehmung des Gehäuses dargestellt. Der Gehäuseteil kann besonders bevorzugt als Spritzgießbauteil vorliegen, sodass der Bereich des Treibmittelkanals, die Düse und der Unterdruckkanal während eines gemeinsamen Spritzgießvorgangs ausgebildet werden beziehungsweise ausgebildet sind.

An dem Gehäuse sind sowohl der Treibmitteleinlassanschluss als auch der Treibmittelauslassanschluss ausgebildet. Lediglich einer der beiden Anschlüsse, nämlich der Treibmittelauslassanschluss, ist als Steckanschluss ausgebildet, mittels welchem eine Strömungsverbindung durch Einstecken hergestellt werden kann. Der Steckanschluss ermöglicht das Herstellen einer Strömungsverbindung mit einer hohen Dichtigkeit, welche zudem äußerst tolerant gegen Verlagerungen, insbesondere der Unterdruckbereitstellungseinrichtung bezüglich des Verdichtergehäuses, ist.

Weiterhin ist es vorgesehen, dass das Gehäuse zur unmittelbaren Befestigung an dem Verdichtergehäuse ausgebildet ist. Das bedeutet, dass das Gehäuse bei der Montage der Unterdruckbereitstellungseinrichtung an dem Verdichtergehäuse unmittelbar anliegend angeordnet und an diesem befestigt wird. Es ist also eine unmittelbare Verbindung zwischen dem Gehäuse und dem Verdichtergehäuse vorgesehen und ausgebildet. Die Befestigung des Gehäuses an dem Verdichtergehäuse erfolgt beispielsweise mittels wenigstens einer Schraube, wobei die Schraube einerseits in das Gehäuse und andererseits in das Verdichtergehäuse eingreift. Beispielsweise durchgreift die Schraube einen Befestigungsflansch des Gehäuses vollständig und greift bereichsweise in das Verdichtergehäuse ein, in welchem sie mittels eines Gewindes gehalten ist.

Die beschriebene Ausgestaltung der Verdichteranordnung, insbesondere der Unterdruckbereitstellungseinrichtung und des Gehäuses, ermöglicht eine einfache Montage bei gleichzeitig hervorragender Dichtheit. Zum Herstellen der Strömungsverbindung des als Steckanschluss ausgebildeten Anschlusses ist lediglich ein Einstecken zweier Elemente ineinander notwendig. Zudem ermöglicht die Verdichteranordnung eine gute Diagnostizierbarkeit, weil die Funktionsfähigkeit, insbesondere die Dichtheit, der Unterdruckbereitstellungseinrichtung mithilfe eines Drucksensors diagnostizierbar ist, der den Druck in der Verdichteranordnung, beispielsweise in dem Unterdruckkanal, an dem Unterdruckanschluss oder auf der Hochdruckseite des Verdichters misst. Ein Drucksensor ist üblicherweise in jedem Fall vorhanden, um den Druck des Frischgases, welches dann auch als Ladeluft bezeichnet werden kann, zu bestimmen.

Zusätzlich oder alternativ kann die Unterdruckbereitstellungseinrichtung einen weiteren Drucksensor aufweisen, mittels welchem der Druck in dem Unterdruckkanal ermittelt wird. Zur vollständigen Diagnose beziehungsweise Dichtheitsprüfung der Unterdruckbereitstellungseinrichtung sind insoweit lediglich der üblicherweise ohnehin vorhandene Drucksensor des Verdichters und/oder der dem Unterdruckkanal zugeordnete weitere Drucksensor notwendig.

Insoweit wird mithilfe der beschriebenen Verdichteranordnung zudem eine hohe Betriebssicherheit erzielt.

Die Erfindung sieht vor, dass der Treibmitteleinlassanschluss mit einem ersten Anschluss und der Treibmittelauslassanschluss mit einem zweiten Anschluss in strömungstechnische Verbindung bringbar ist, wobei der erste Anschluss und der zweite Anschluss an dem Verdichtergehäuse ausgebildet sind. Über den ersten Anschluss kann insoweit der Unterdruckbereitstellungseinrichtung beziehungsweise dem Treibmittelkanal Treibmittel zugeführt und über den zweiten Anschluss entnommen werden. In anderen Worten ist der Treibmittelkanal über den ersten Anschluss mit der Hochdruckseite des Verdichters und über den zweiten Anschluss mit der Niederdruckseite des Verdichters strömungstechnisch verbunden oder zumindest verbindbar.

Die beiden Anschlüsse, also der erste Anschluss und der zweite Anschluss, liegen jeweils an dem Verdichtergehäuse vor. Insoweit wird die Unterdruckbereitstellungseinrichtung beziehungsweise ihr Gehäuse unmittelbar an dem Verdichtergehäuse angeordnet, nämlich derart, dass der Treibmitteleinlassanschluss mit dem ersten Anschluss und der Treibmittelauslassanschluss mit dem zweiten Anschluss in Strömungsverbindung steht. Durch eine derartige Anordnung der Unterdruckbereitstellungseinrichtung an dem Verdichtergehäuse werden die kostengünstige Herstellung, die einfache Montage sowie die hervorragende Diagnostizierbarkeit jeweils erzielt.

Der erste Anschluss ist beispielsweise strömungstechnisch an einen Strömungsdämpfer angeschlossen, der in dem Verdichtergehäuse angeordnet und/oder ausgebildet ist. Der Strömungsdämpfer dient der Dämpfung insbesondere hochfrequenter Störgeräusche. Beispielsweise arbeitet der Strömungsdämpfer als Helmholtz-Resonator und/oder als Hohlraumresonator. In anderen Worten ist der Treibmitteleinlassanschluss unmittelbar an den Strömungsdämpfer und/oder zumindest über diesen an die Hochdruckseite des Verdichters angeschlossen. Es kann vorgesehen sein, dass der Treibmitteldurchsatz, also die Treibmittelmenge pro Zeiteinheit, die der Unterdruckbereitstellungseinrichtung zugeführt wird, derart gewählt ist, dass durch die Entnahme des Treibmittels aus dem Strömungsdämpfer dessen akustische Wirkung optimiert wird. Besonders bevorzugt wird hierdurch der Wirkungsgrad des Verdichters nicht beeinflusst, insbesondere nicht verschlechtert.

Die Erfindung sieht vor, dass der Treibmittelauslassanschluss einen Steckverbindungsvorsprung und der zweite Anschluss eine Steckverbindungsaufnahme zur Aufnahme des Steckverbindungsvorsprungs aufweist. In anderen Worten liegt der Steckverbindungsvorsprung an dem Gehäuse der Unterdruckbereitstellungseinrichtung vor, insbesondere ist er mit diesem materialeinheitlich und/oder einstückig ausgeführt. Das bedeutet, dass der Steckverbindungsvorsprung bevorzugt während des vorstehend bereits erwähnten Spritzgießvorgangs gemeinsam mit dem Treibmittelkanal, der Düse und dem Unterdruckkanal ausgebildet ist.

Der zweite Anschluss weist hingegen die Steckverbindungsaufnahme auf, welche derart ausgestaltet ist, dass nach bestimmungsgemäßer Anordnung des Steckverbindungsvorsprungs in der Steckverbindungsaufnahme die Strömungsverbindung zwischen dem Treibmittelauslassanschluss und dem zweiten Anschluss und mithin zwischen dem Treibmittelkanal und der Niederdruckseite des Verdichters hergestellt ist. Eine derartige Ausgestaltung ermöglicht eine besonders einfache Montage.

Die Erfindung sieht vor, dass der Treibmitteleinlassanschluss und der erste Anschluss jeweils eine eine Anlagefläche durchgreifende Durchtrittsöffnung aufweisen, sodass eine Strömungsverbindung zwischen dem Treibmitteleinlassanschluss und dem ersten Anschluss durch planes Anlegen der Anlageflächen aneinander herstellbar ist. Die Durchtrittsöffnung des Treibmitteleinlassanschlusses durchgreift insoweit eine an dem Gehäuse der Unterdruckbereitstellungseinrichtung ausgebildete Anlagefläche, die Durchtrittsöffnung des ersten Anschlusses eine an dem Verdichtergehäuse ausgebildete Anlagefläche. Die Anlageflächen sind vorzugsweise jeweils vollständig plan. Die Durchtrittsöffnungen sind besonders bevorzugt jeweils randgeschlossen in der entsprechenden Anlagefläche ausgebildet, weisen also einen in Umfangsrichtung durchgehenden Rand auf.

Die Strömungsverbindung zwischen dem Treibmitteleinlassanschluss und dem ersten Anschluss soll durch planes Anlegen der Anlageflächen aneinander herstellbar sein. Hierzu werden die Anlageflächen vorzugsweise dicht aneinander angepresst und/oder mittels einer Dichtung gegeneinander abgedichtet. Die durch das plane Anlegen der Anlageflächen aneinander ausgebildete Strömungsverbindung weist eine vergleichsweise geringe Toleranz gegenüber Verlagerungen auf, insbesondere im Vergleich zu der mittels des Steckanschlusses hergestellten Strömungsverbindung. Bei einem Lösen des Gehäuses von dem Verdichtergehäuse, insbesondere einem unbeabsichtigten Lösen, tritt insoweit zunächst auf Seiten des Treibmitteleinlassanschlusses eine Undichtigkeit auf. Erst bei einer weiteren Verlagerung kann die auf Seiten des Treibmittelauslassanschlusses vorliegende Strömungsverbindung undicht werden.

Mithilfe des bereits beschriebenen Drucksensors beziehungsweise des weiteren Drucksensors ist jedoch bereits das Unterbrechen der Strömungsverbindung zwischen dem Treibmitteleinlassanschluss und dem ersten Anschluss diagnostizierbar, sodass rechtzeitig auf einen Fehler erkannt und dieser angezeigt werden kann. Auf diese Art und Weise wird verhindert, dass das über den Treibmittelkanal von der Unterdruckbereitstellungseinrichtung angesaugte Fluid aus der Verdichteranordnung entweichen kann. Vielmehr wird dieses auch dann noch zuverlässig über den Treibmittelauslassanschluss dem Verdichter zugeführt, wenn die Strömungsverbindung zwischen dem Treibmitteleinlassanschluss und dem ersten Anschluss bereits unterbrochen ist beziehungsweise undicht ist. Insoweit ist die bereits erwähnte hervorragende Diagnostizierbarkeit der Unterdruckbereitstellungseinrichtung umgesetzt.

Eine bevorzugte weitere Ausgestaltung der Erfindung sieht vor, dass der Treibmitteleinlassanschluss eine mit dem ersten Anschluss zusammenwirkende Axialringdichtung und der Treibmittelauslassanschluss eine mit dem zweiten Anschluss zusammenwirkende Radialringdichtung aufweist. Die Axialringdichtung umgreift in Umfangsrichtung den Treibmitteleinlassanschluss und nach der Montage auch den ersten Anschluss vollständig. Entsprechendes gilt für die Radialringdichtung und den Treibmittelauslassanschluss sowie den zweiten Anschluss. Unter der Axialringdichtung ist eine Ringdichtung zu verstehen, bei welcher die Dichtwirkung durch axiales elastisches Komprimieren erzielt wird. Entsprechend ist die Radialringdichtung eine Ringdichtung, bei welcher die Dichtwirkung durch elastisches radiales Komprimieren bewirkt wird.

Vorzugsweise ist es vorgesehen, dass die Axialringdichtung zur Realisierung der Dichtwirkung an den Anlageflächen des Treibmitteleinlassanschlusses und des ersten Anschlusses oder zumindest einer dieser Anlageflächen dichtend anliegt. Beispielsweise ist die Axialringdichtung in einer Dichtungsaufnahme angeordnet, die eine der Anlageflächen durchgreift, und liegt nach der Montage an der jeweils anderen Anlagefläche dichtend an. Selbstverständlich können auch in beiden Anlageflächen derartige Dichtungsaufnahmen vorliegen, solange sichergestellt ist, dass nach der Montage der Treibmitteleinlassanschluss und der erste Anschluss dicht miteinander verbunden sind.

Die Radialringdichtung ist vorzugsweise derart ausgebildet, dass sie an dem Steckverbindungsvorsprung vorliegt und diesen in Umfangsrichtung umgreift. Die Radialringdichtung wird zusammen mit dem Steckverbindungsvorsprung in die Steckverbindungsaufnahme eingebracht und liegt nachfolgend an einer die Steckverbindungsaufnahme in radialer Richtung begrenzenden Wand dichtend an, insbesondere in Umfangsrichtung durchgehend. Beispielsweise ist in dem Steckverbindungsvorsprung eine Dichtungsaufnahme ausgebildet, in welcher die Radialringdichtung angeordnet ist, um eine zuverlässige Befestigung der Radialringdichtung zu realisieren und mithin ein Verlieren der Radialringdichtung zu verhindern.

Eine solche Wahl der Dichtungen, also das Vorsehen der Axialringdichtung an dem Treibmitteleinlassanschluss und das Vorsehen der Radialringdichtung an dem Treibmittelauslassanschluss, stellt die vorstehend bereits beschriebene zuverlässige Diagnostizierbarkeit sicher, indem die Strömungsverbindung des Treibmittelauslassanschlusses mit dem zweiten Anschluss aufgrund der Radialringdichtung gegenüber Verlagerungen wesentlich toleranter ist als die Strömungsverbindung zwischen dem Treibmitteleinlassanschluss und dem ersten Anschluss über die Axialringdichtung.

Bei einer Verlagerung der Unterdruckbereitstellungseinrichtung, insbesondere des Gehäuses, bezüglich des Verdichtergehäuses ausgehend von einer ersten Stellung, in der beide Strömungsverbindungen dicht sind, in Richtung einer zweiten Stellung, in der beide Strömungsverbindungen unterbrochen beziehungsweise undicht sind, wird also zunächst die Strömungsverbindung zwischen dem Treibmitteleinlassanschluss und dem ersten Anschluss und erst später die Strömungsverbindung zwischen dem Treibmittelauslassanschluss und dem zweiten Anschluss undicht.

Eine weitere bevorzugte Ausführungsform der Erfindung sieht vor, dass der Treibmittelkanal innerhalb des Gehäuses eine Umlenkung aufweist. Eine derartige Ausgestaltung stellt einerseits eine kompakte Bauform der Unterdruckbereitstellungseinrichtung und mithin der Verdichteranordnung sicher. Andererseits ist eine äußerst einfache und rasche Montage möglich, weil das Montieren der Unterdruckbereitstellungseinrichtung beziehungsweise ihres Gehäuses bevorzugt in einer einzigen Montagerichtung erfolgt. Zum Herstellen der Strömungsverbindung zwischen den Anschlüssen des Gehäuses und den Anschlüssen des Verdichtergehäuses ist also lediglich das Verlagern in die Montagerichtung notwendig. Bei der Verlagerung wird zunächst der Steckverbindungsvorsprung in die Steckverbindungsaufnahme eingreifen und anschließend die Anlageflächen des Treibmitteleinlassanschlusses und des ersten Anschlusses dichtend in Anlagekontakt geraten.

Eine weitere Ausführungsform der Erfindung sieht vor, dass die Umlenkung mittels eines den Treibmittelkanal bereichsweise begrenzenden Deckels des Gehäuses ausgebildet ist. Das Gehäuse ist insoweit mehrteilig ausgebildet und weist ein Grundelement und den Deckel auf. In dem Grundelement ist beispielsweise ein Teil des Treibmittelkanals, insbesondere ein Großteil des Treibmittelkanals angeordnet. Zusätzlich sind vorzugsweise in dem Grundelement der Unterdruckkanal zumindest bereichsweise sowie die Düse angeordnet. Der Deckel ist lösbar oder unlösbar mit dem Grundelement verbunden. Das lösbare Verbinden erfolgt beispielsweise formschlüssig, insbesondere durch eine Rastverbindung. Das unlösbare Verbinden kann beispielsweise durch Schweißen realisiert sein. Die Verwendung des Deckels ermöglicht ein einfaches und kostengünstiges Ausgestalten des Gehäuses, beispielsweise durch Spritzgießen, wobei das Grundelement und der Deckel separat voneinander hergestellt werden.

In einer weiteren Ausführungsform der Erfindung ist vorgesehen, dass eine Längsmittelachse des Treibmittelkanals an dem Treibmitteleinlassanschluss senkrecht auf einer Längsmittelachse des Treibmittelkanals an dem Treibmittelauslassanschluss oder auf einer diese aufnehmenden Ebene steht. In anderen Worten sind der Treibmitteleinlassanschluss und der Treibmittelauslassanschluss in unterschiedliche Richtungen gerichtet. Zwischen den genannten Längsmittelachsen liegt ein Winkel von 90° vor. Dies ermöglicht eine einfache Montage durch Einschieben des Steckverbindungsvorsprungs des Treibmittelauslassanschlusses in die Steckverbindungsaufnahme des Verdichtergehäuses, bis die Anlageflächen des Treibmitteleinlassanschlusses und des ersten Anschlusses aneinander anliegen.

Schließlich kann im Rahmen einer weiteren Ausgestaltung der Erfindung vorgesehen sein, dass das Gehäuse mittels wenigstens einer Schraube befestigbar ist, wobei eine Längsmittelachse einer Aufnahmeöffnung des Gehäuses zur Aufnahme der Schraube parallel zu einer Längsmittelachse des Treibmittelkanals an dem Treibmitteleinlassanschluss oder einer Längsmittelachse des Treibmittelkanals an dem Treibmittelauslassanschluss angeordnet ist. Die Schraube dient der Befestigung des Gehäuses beispielsweise an dem Verdichtergehäuse. Zur Aufnahme der Schraube verfügt das Gehäuse über die Aufnahmeöffnung, welche derart bemessen ist, dass ein Schaft der Schraube durch sie hindurchführbar ist, wohingegen ein Kopf der Schraube an einem die Aufnahmeöffnung begrenzenden Rand anliegt beziehungsweise der Rand einen Endanschlag für den Kopf darstellt.

Die Aufnahmeöffnung ist in Richtung ihrer Längsmittelachse vorzugsweise vollständig gerade. Die Längsmittelachse der Aufnahmeöffnung verläuft parallel zu der Längsmittelachse des Treibmittelkanals auf Seiten des Treibmitteleinlassanschlusses und/oder auf Seiten des Treibmittelauslassanschlusses. Hierdurch wirkt eine mittels der Schraube bewirkbare Montagekraft zwischen dem Gehäuse und dem Verdichtergehäuse in einer Richtung, welche einem Entfernen der Anschlüsse des Gehäuses von den Anschlüssen des Verdichtergehäuses entgegengerichtet ist.

In anderen Worten wird mittels der Schraube das Gehäuse derart an dem Verdichtergehäuse befestigt, dass die Anlageflächen des Treibmitteleinlassanschlusses und des ersten Anschlusses aneinandergedrängt werden. Besonders bevorzugt steht hierzu die Längsmittelachse der Aufnahmeöffnung für die Schraube senkrecht auf beiden Anlageflächen. Eine solche Ausgestaltung stellt insoweit eine hervorragende Dichtheit der Verdichteranordnung sicher.

Die Erfindung betrifft weiterhin ein Verfahren zum Betreiben einer Verdichteranordnung für eine Brennkraftmaschine, insbesondere einer Verdichteranordnung gemäß den Ausführungen im Rahmen dieser Beschreibung, wobei die Verdichteranordnung über einen in einem Verdichtergehäuse angeordneten, eine Niederdruckseite und eine Hochdruckseite aufweisenden Verdichter und über eine Unterdruckbereitstellungseinrichtung verfügt, die einen einerseits über einen Treibmitteleinlassanschluss an die Hochdruckseite des Verdichters und andererseits über einen Treibmittelauslassanschluss an die Niederdruckseite des Verdichters strömungstechnisch angeschlossenen Treibmittelkanal mit einer Düse und einen strömungstechnisch zwischen dem Treibmitteleinlassanschluss und dem Treibmittelauslassanschluss ein den Treibmittelkanal einmündenden Unterdruckkanal aufweist, wobei der Treibmittelkanal in einem von dem Verdichtergehäuse separaten Gehäuse ausgebildet ist, an dem der Treibmitteleinlassanschluss mit einem ersten Anschluss und der Treibmittelauslassanschluss mit einem zweiten Anschluss ausgebildet sind, wobei der erste Anschluss und der zweite Anschluss an dem Verdichtergehäuse ausgebildet sind, wobei das Gehäuse zur unmittelbaren Befestigung an dem Verdichtergehäuse ausgebildet ist.

Dabei ist vorgesehen, dass lediglich der Treibmittelauslassanschluss als Steckanschluss ausgebildet ist, wobei der Treibmittelauslassanschluss einen Steckverbindungsvorsprung und der zweite Anschluss eine Steckverbindungsaufnahme zur Aufnahme des Steckverbindungsvorsprungs aufweist, und dass der Treibmitteleinlassanschluss und der erste Anschluss jeweils eine eine Anlagefläche durchgreifende Durchtrittsöffnung aufweisen, sodass eine Strömungsverbindung zwischen dem Treibmitteleinlassanschluss und dem ersten Anschluss durch planes Anlegen der Anlageflächen aneinander herstellbar ist, und dass mittels eines Drucksensors ein Druck gemessen und bei Unterschreiten oder Überschreiten eines Grenzwerts durch den Druck auf eine Leckage erkannt wird.

Auf die Vorteile einer derartigen Vorgehensweise beziehungsweise einer derartigen Ausgestaltung der Verdichteranordnung wurde bereits hingewiesen. Sowohl die Verdichteranordnung als auch das Verfahren zu ihrem Betreiben können gemäß den Ausführungen im Rahmen dieser Beschreibung weitergebildet sein, sodass insoweit auf diese verwiesen wird.

Der Drucksensor dient beispielsweise dem Messen des Drucks in dem Unterdruckkanal, an dem Unterdruckanschluss oder auf der Hochdruckseite des Verdichters. Weicht der gemessene Druck von dem Grenzwert ab oder unterschreitet oder überschreitet er ihn, so kann davon ausgegangen werden, dass die Leckage oder eine andere Fehlfunktion vorliegt.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Darstellung einer Verdichteranordnung für eine Brennkraftmaschine, welche eine Unterdruckbereitstellungseinrichtung zur Bereitstellung eines Unterdrucks für wenigstens einen Unterdruckverbraucher aufweist, sowie
- Figur 2: eine schematische Darstellung eines Bereichs der Verdichteranordnung in einer Explosionsdarstellung.

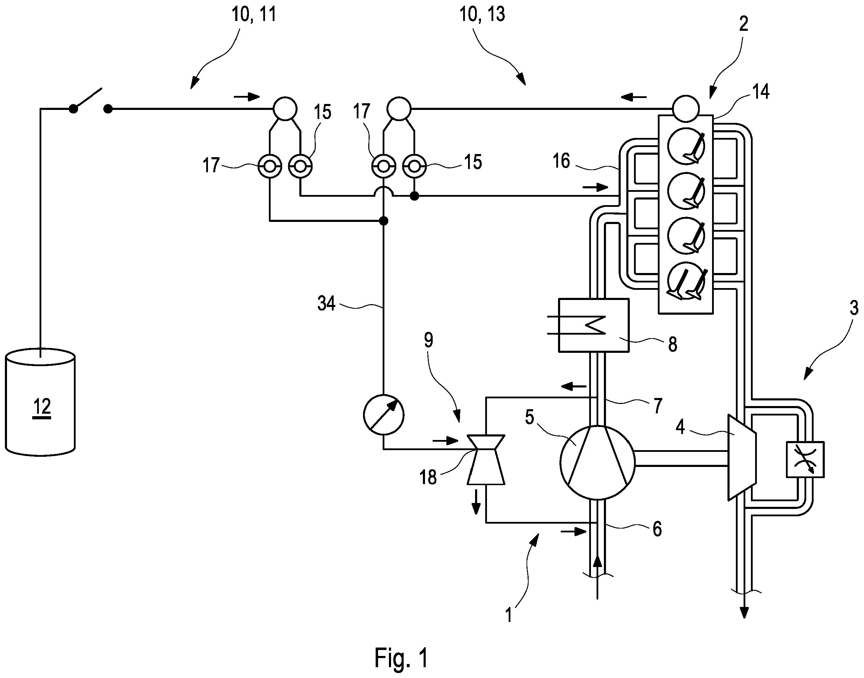

Die Figur 1 zeigt eine schematische Darstellung einer Verdichteranordnung 1 für eine Brennkraftmaschine 2. Die Verdichteranordnung 1 ist Bestandteil eines Abgasturboladers 3, der eine Turbine 4 und einen Verdichter 5 aufweist, wobei letzterer Bestandteil der Verdichteranordnung 1 ist. Der Turbine 4 ist Abgas der Brennkraftmaschine 2 zuführbar. Mithilfe der Turbine 4 wird in dem Abgas enthaltene Strömungsenergie und/oder Enthalpie in kinetische Energie umgewandelt, welche wiederum zum Antreiben des Verdichters 5 dient. Der Verdichter 5 dient zum Verdichten von Frischgas, wobei dem Verdichter 5 das Frischgas auf einer Niederdruckseite 6 bereitgestellt wird. Das mittels des Verdichters 5 verdichtete Frischgas steht auf seiner Hochdruckseite 7 der Brennkraftmaschine 2 zur Verfügung. Strömungstechnisch zwischen der Hochdruckseite 7 des Verdichters 5 und der Brennkraftmaschine 2 kann ein Ladeluftkühler 8 vorgesehen sein.

Strömungstechnisch parallel zu dem Verdichter 5 ist eine Unterdruckbereitstellungseinrichtung 9 vorgesehen, welche der Bereitstellung von Unterdruck für wenigstens einen Unterdruckverbraucher 10, in dem hier dargestellten Ausführungsbeispiel für zwei Unterdruckverbraucher 10, dient. Einer der Unterdruckverbraucher 10 liegt als Spüleinrichtung 11 für einen Filter 12 vor, wobei der Filter 12 vorzugsweise als Aktivkohlefilter ausgestaltet ist. Ein anderer der Unterdruckverbraucher 10 ist als Entlüftungseinrichtung 13 ausgestaltet, die der Entlüftung eines Zylinderkurbelgehäuses 14 der Brennkraftmaschine 2 dient.

Der Unterdruckverbraucher 10 beziehungsweise die Unterdruckverbraucher 10 sind jeweils über Rückschlagventile 15 an ein Saugrohr 16 der Brennkraftmaschine 2 beziehungsweise einen Einlasskrümmer angeschlossen. Zusätzlich ist der Unterdruckverbraucher 10 beziehungsweise sind die Unterdruckverbraucher 10 über Rückschlagventile 17 an einen Unterdruckanschluss 18 der Unterdruckbereitstellungseinrichtung 9 angeschlossen. Der Unterdruckverbraucher 10 beziehungsweise die Unterdruckverbraucher 10 sind insoweit stets strömungstechnisch mit dem Saugrohr 16 oder dem Unterdruckanschluss 18 verbunden, je nachdem, wo ein stärkerer Unterdruck vorliegt.

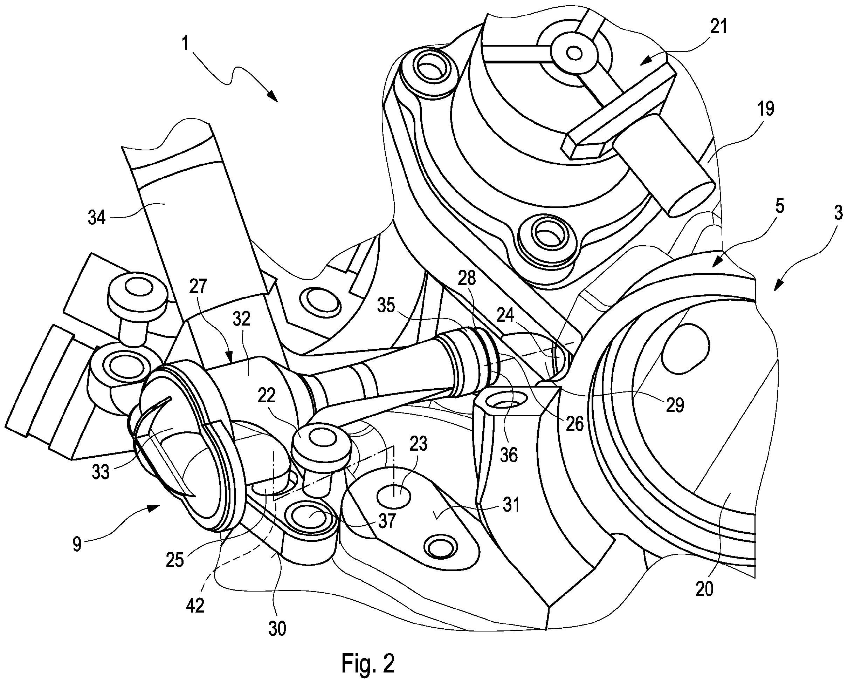

Die Figur 2 zeigt eine schematische Darstellung eines Bereichs der Verdichteranordnung 1 nach Art einer Explosionsdarstellung. Zu erkennen ist der Verdichter 5 des Abgasturboladers 3 sowie ein Verdichtergehäuse 19 des Verdichters 5. Der Verdichter 5 weist einen Frischgaseinlasskanal 20 auf, der in dem Verdichtergehäuse 19 ausgebildet ist. Über den Frischgaseinlasskanal 20 ist die Niederdruckseite 6 des Verdichters 5 mit einer Außenumgebung der Verdichteranordnung 1 strömungsverbunden, vorzugsweise über einen Filter beziehungsweise Luftfilter. An dem Verdichtergehäuse 19 kann wenigstens ein weiteres Anbauelement 21 befestigt sein, beispielsweise mittels wenigstens einer Schraube.

Weiterhin ist die Unterdruckbereitstellungseinrichtung 9 unmittelbar an dem Verdichtergehäuse 9 befestigt, nämlich vorzugsweise wiederum mittels einer Schraube 22. An dem Verdichtergehäuse 19 liegen ein erster Anschluss 23 sowie ein zweiter Anschluss 24 vor, wobei der erste Anschluss 23 innerhalb des Verdichtergehäuses 19 mit der Hochdruckseite 7 des Verdichters 5 und der zweite Anschluss 24 ebenfalls innerhalb des Verdichtergehäuses 19 mit der Niederdruckseite 6 strömungsverbunden ist. Beispielsweise ist der zweite Anschluss 24 innerhalb des Verdichtergehäuses 19 an den Frischgaseinlasskanal 20 strömungstechnisch angeschlossen, insbesondere mündet er in diesen ein.

Die Unterdruckbereitstellungseinrichtung 9 weist einen Treibmitteleinlassanschluss 25 sowie einen Treibmittelauslassanschluss 26 auf. Der Treibmitteleinlassanschluss 25 wird bei einer Montage der Unterdruckbereitstellungseinrichtung 9 an dem Verdichtergehäuse 19 mit dem ersten Anschluss 23 und der Treibmittelauslassanschluss 26 mit dem zweiten Anschluss 24 in Strömungsverbindung gebracht. Sowohl der Treibmitteleinlassanschluss 25 als auch der Treibmittelauslassanschluss 26 liegen an einem Gehäuse 27 der Unterdruckbereitstellungseinrichtung 9 vor.

Der Treibmittelauslassanschluss 26 ist als Steckanschluss ausgebildet und verfügt insoweit über einen Steckverbindungsvorsprung 28, der zur Aufnahme in einer Steckverbindungsaufnahme 29 des zweiten Anschlusses 24 vorgesehen und ausgebildet ist. Der Treibmitteleinlassanschluss 25 und der erste Anschluss 23 weisen hingegen jeweils eine Anlagefläche 30 beziehungsweise 31 auf. Die Strömungsverbindung zwischen dem Treibmitteleinlassanschluss 25 und dem ersten Anschluss 23 wird durch planes Anlegen dieser beiden Anlageflächen 30 und 31 aneinander hergestellt.

Es ist erkennbar, dass das Gehäuse 27 mehrteilig ist und aus einem Grundelement 32 und einem Deckel 33 besteht. Der Deckel 33 ist vorzugsweise unlösbar mit dem Grundelement 32 verbunden, jedoch separat von diesem hergestellt. Das Grundelement 32 und der Deckel 33 werden insoweit erst nach ihrer Herstellung miteinander verbunden. An dem Gehäuse 27, in dem hier dargestellten Ausführungsbeispiel an dem Grundelement 32, ist der Unterdruckanschluss 18 ausgebildet, an welchen der wenigstens eine Unterdruckverbraucher 10 über eine Unterdruckleitung 34 anschließbar ist.

In dem Gehäuse 27 ist ein hier nicht erkennbarer Treibmittelkanal ausgebildet, über den der Treibmitteleinlassanschluss 25 und der Treibmittelauslassanschluss 26 innerhalb des Gehäuses 27 strömungstechnisch miteinander verbunden sind. Der Treibmittelkanal liegt größtenteils in dem Grundelement 32 vor. Bereichsweise wird er jedoch von dem Deckel 33 begrenzt, wodurch eine Umlenkung realisiert ist.

Innerhalb des Gehäuses 27 liegt wenigstens eine Düse in dem Strömungsweg zwischen dem Treibmitteleinlassanschluss und dem Treibmittelauslassanschluss 26, also in dem Treibmittelkanal, vor. In dem hier dargestellten Ausführungsbeispiel ist die Düse als Treibstrahldüse ausgebildet, welche in eine Mischkammer einmündet, an welche auch der Unterdruckanschluss 18 über einen Unterdruckkanal strömungstechnisch angeschlossen ist. Bei einer Durchströmung des Treibmittelkanals mit Treibmittel wird Fluid durch den Unterdruckkanal angesaugt und von dem Treibmittel in Richtung des Treibmittelauslassanschlusses 26 mitgenommen. Hierdurch wird an dem Unterdruckanschluss 18 Unterdruck bereitgestellt.

Der Treibmitteleinlassanschluss 25 weist eine Axialringdichtung 42 (hier nicht erkennbar) und der Treibmittelauslassanschluss 26 eine Radialringdichtung 35 auf. Die Axialringdichtung ist in eine Dichtungsaufnahme und die Radialringdichtung 35 in einer weiteren Dichtungsaufnahme 36 angeordnet. Die Dichtungsaufnahmen, insbesondere die Dichtungsaufnahme 36, sind in dem Gehäuse 27, insbesondere in dem Grundelement 32, ausgebildet. Es ist erkennbar, dass der Treibmitteleinlassanschluss 25 und der Treibmittelauslassanschluss 26 gegeneinander angewinkelt sind, sodass ihre Längsmittelachsen beziehungsweise die Längsmittelachsen aufnehmenden Ebenen unter einem Winkel aufeinander stehen, welcher größer als 0° und kleiner als 180° ist. Beispielsweise beträgt der Winkel mindestens 75° und höchstens 105°, mindestens 80° und höchstens 100° oder im Wesentlichen oder genau 90°.

Die vorstehend bereits erwähnte Schraube, mittels welcher die Unterdruckbereitstellungseinrichtung 9 an dem Verdichtergehäuse 19 befestigt ist, weist vorzugsweise eine Längsmittelachse auf, welche zu einer Längsmittelachse des Treibmittelkanals auf Seiten des Treibmitteleinlassanschlusses 25 parallel verläuft, jedoch bezüglich einer Längsmittelachse des Treibmittelkanals auf Seiten des Treibmittelauslassanschlusses 26 beziehungsweise einer diese Längsmittelachse aufnehmenden Ebene angewinkelt ist, wobei der Winkel größer als 0° und kleiner als 180° ist. Beispielsweise beträgt der Winkel wiederum mindestens 75° und höchstens 105°, mindestens 80° und höchstens 100°, mindestens 85° und höchstens 95° oder im Wesentlichen oder genau 90°. Hierdurch wird eine besonders gute Dichtwirkung insbesondere der Axialringdichtung bewirkt. Entsprechend der Ausrichtung der Schraube 22 ist eine Aufnahmeöffnung 37 zur Aufnahme der Schraube 22 mit ihrer Längsmittelachse ebenfalls parallel zu der Längsmittelachse des Treibmittelkanals auf Seiten des Treibmitteleinlassanschlusses 25 ausgerichtet.

Die beschriebene Verdichteranordnung 1 hat den Vorteil, dass zum einen die Unterdruckbereitstellungseinrichtung 9 kompakt aufgebaut und zudem austauschbar ist. Zum anderen wird eine hohe Betriebssicherheit sichergestellt, indem der Treibmittelauslassanschluss 26 als Steckanschluss ausgebildet ist, wohingegen die Strömungsverbindung zwischen dem Treibmitteleinlassanschluss 25 und dem ersten Anschluss 23 durch planes Anlegen der Anlageflächen 30 und 31 aneinander hergestellt wird. Hierdurch ist ein besonders einfaches Erkennen auf eine Undichtheit beziehungsweise Leckage möglich.

## Patentansprüche

1. Verdichteranordnung (1) für eine Brennkraftmaschine (2), mit einem in einem Verdichtergehäuse (19) angeordneten, eine Niederdruckseite (6) und eine Hochdruckseite (7) aufweisenden Verdichter (5) und mit einer Unterdruckbereitstellungseinrichtung (9), die einen einerseits über einen Treibmitteleinlassanschluss (25) an die Hochdruckseite (7) des Verdichters (5) und andererseits über einen Treibmittelauslassanschluss (26) an die Niederdruckseite (6) des Verdichters (5) strömungstechnisch angeschlossenen Treibmittelkanal mit einer Düse und einen strömungstechnisch zwischen dem Treibmitteleinlassanschluss (25) und dem Treibmittelauslassanschluss (26) in den Treibmittelkanal einmündenden Unterdruckkanal aufweist, wobei der Treibmittelkanal in einem von dem Verdichtergehäuse (19) separaten Gehäuse (27) ausgebildet ist, an dem der Treibmitteleinlassanschluss (25) mit einem ersten Anschluss (23) und der Treibmittelauslassanschluss (26) mit einem zweiten Anschluss (24) ausgebildet sind, wobei der erste Anschluss (23) und der zweite Anschluss (24) an dem Verdichtergehäuse (19) ausgebildet sind, wobei das Gehäuse (27) zur unmittelbaren Befestigung an dem Verdichtergehäuse (19) ausgebildet ist, wobei der Treibmittelauslassanschluss (26) einen Steckverbindungsvorsprung (28) und der zweite Anschluss (24) eine Steckverbindungsaufnahme (29) zur Aufnahme des Steckverbindungsvorsprungs (28) aufweist, und wobei der Treibmitteleinlassanschluss (25) und der erste Anschluss (23) jeweils eine eine Anlagefläche (30,31) durchgreifende Durchtrittsöffnung aufweisen, sodass eine Strömungsverbindung zwischen dem Treibmitteleinlassanschluss (25) und dem ersten Anschluss (23) durch planes Anlegen der Anlageflächen (30,31) aneinander herstellbar ist, **dadurch gekennzeichnet, dass** lediglich der Treibmittelauslassanschluss (26) als Steckanschluss ausgebildet ist.

2. Verdichteranordnung nach Anspruch 1, **dadurch gekennzeichnet, dass** der Treibmitteleinlassanschluss (25) eine mit dem ersten Anschluss (23) zusammenwirkende Axialringdichtung (42) und der Treibmittelauslassanschluss (26) eine mit dem zweiten Anschluss (24) zusammenwirkende Radialringdichtung (43) aufweist.

3. Verdichteranordnung nach einem der vorhergehenden Ansprüche, **dadurch gekennzeichnet, dass** der Treibmittelkanal innerhalb des Gehäuses (27) eine Umlenkung aufweist.

4. Verdichteranordnung nach Anspruch 3, **dadurch gekennzeichnet, dass** die Umlenkung mittels eines den Treibmittelkanal bereichsweise begrenzenden Deckels (33) des Gehäuses (27) ausgebildet ist.

5. Verdichteranordnung nach einem der vorhergehenden Ansprüche, **dadurch gekennzeichnet, dass** eine Längsmittelachse des Treibmittelkanals an dem Treibmitteleinlassanschluss (25) senkrecht auf einer Längsmittelachse des Treibmittelkanals an dem Treibmittelauslassanschluss (26) oder auf einer diese aufnehmenden Ebene steht.

6. Verdichteranordnung nach einem der vorhergehenden Ansprüche, **dadurch gekennzeichnet, dass** das Gehäuse (27) mittels wenigstens einer Schraube (22) befestigbar ist, wobei eine Längsmittelachse einer Aufnahmeöffnung (37) des Gehäuses (27) zur Aufnahme der Schraube (22) parallel zu einer Längsmittelachse des Treibmittelkanals an dem Treibmitteleinlassanschluss (25) und/oder einer Längsmittelachse des Treibmittelkanals an dem Treibmittelauslassanschluss (26) angeordnet ist.

7. Verfahren zum Betreiben einer Verdichteranordnung (1) für eine Brennkraftmaschine (2), insbesondere einer Verdichteranordnung (1) nach einem oder mehreren der vorhergehenden Ansprüche, wobei die Verdichteranordnung (1) über einen in einem Verdichtergehäuse (19) angeordneten, eine Niederdruckseite (6) und eine Hochdruckseite (7) aufweisenden Verdichter und über eine Unterdruckbereitstellungseinrichtung (9) verfügt, die einen einerseits über einen Treibmitteleinlassanschluss (25) an die Hochdruckseite (7) des Verdichters (5) und andererseits über einen Treibmittelauslassanschluss (26) an die Niederdruckseite (6) des Verdichters (5) strömungstechnisch angeschlossenen Treibmittelkanal mit einer Düse und eine strömungstechnisch zwischen dem Treibmitteleinlassanschluss (25) und dem Treibmittelauslassanschluss (26) in den Treibmittelkanal einmündenden Unterdruckkanal aufweist, wobei der Treibmittelkanal in einem von dem Verdichtergehäuse (19) separaten Gehäuse (27) ausgebildet ist, an dem der Treibmitteleinlassanschluss (25) mit einem ersten Anschluss (23) und der Treibmittelauslassanschluss (26) mit einem zweiten Anschluss (24) ausgebildet sind, wobei der erste Anschluss (23) und der zweite Anschluss (24) an dem Verdichtergehäuse (19) ausgebildet sind, wobei das Gehäuse (27) zur unmittelbaren Befestigung an dem Verdichtergehäuse (19) ausgebildet ist, wobei der Treibmittelauslassanschluss (26) einen Steckverbindungsvorsprung (28) und der zweite Anschluss (24) eine Steckverbindungsaufnahme (29) zur Aufnahme des Steckverbindungsvorsprungs (28) aufweist, und wobei der
Treibmitteleinlassanschluss (25) und der erste Anschluss (23) jeweils eine eine Anlagefläche (30,31) durchgreifende Durchtrittsöffnung aufweisen, sodass eine Strömungsverbindung zwischen dem Treibmitteleinlassanschluss (25) und dem ersten Anschluss (23) durch planes Anlegen der Anlageflächen (30,31) aneinander herstellbar ist, **dadurch gekennzeichnet, dass** lediglich der Treibmittelauslassanschluss (26) als Steckanschluss ausgebildet ist und dass mittels
eines Drucksensors ein Druck gemessen und bei Unterschreiten oder Überschreiten eines Grenzwerts durch den Druck auf eine Leckage erkannt wird.

## Claims

1. Compressor arrangement (1) for an internal combustion engine (2), having a compressor (5) which is arranged in a compressor housing (19) and has a low-pressure side (6) and a high-pressure side (7) and having a negative pressure supply device (9), which has a propellant channel with a nozzle which is fluidically connected on the one hand via a propellent inlet connection (25) to the high-pressure side (7) of the compressor (5) and on the other hand via a propellant outlet connection (26) to the low-pressure side (6) of the compressor (5) and has a negative pressure channel which opens fluidically into the propellant channel between the propellant inlet connection (25) and the propellant outlet connection (26), wherein the propellant channel is formed in a separate housing (27) from the compressor housing (19), on which the propellant inlet connection (25) is formed with a first connection (23) and the propellant outlet connection (26) is formed with a second connection (24), wherein the first connection (23) and the second connection (24) are formed on the compressor housing (19), wherein the housing (27) is configured for direct attachment to the compressor housing (19), wherein the propellant outlet connection (26) has a plug-in connection projection (28) and the second connection (24) has a plug-in connection mount (29) for receiving the plug-in connection projection (28), and wherein the propellant inlet connection (25) and the first connection (23) each have a through opening passing through an abutment surface (30, 31), so that a flow connection can be established between the propellant inlet connection (25) and the first connection (23) by planar abutment of the abutment surfaces (30, 31) against one another, **characterised in that** only the propellant outlet connection (26) is configured as a plug-in connection.

2. Compressor arrangement according to claim 1, **characterised in that** the propellant inlet connection (25) has an axial ring seal (42) cooperating with the first connection (23) and the propellant outlet connection (26) has a radial ring seal (43) cooperating with the second connection (24).

3. Compressor arrangement according to any of the preceding claims, **characterised in that** the propellant channel has a deflection inside the housing (27).

4. Compressor arrangement according to claim 3, **characterised in that** the deflection is formed by means of a cover (33) of the housing (27) which delimits the propellant channel in some sections.

5. Compressor arrangement according to any of the preceding claims, **characterised in that** a longitudinal central axis of the propellant channel at the propellant inlet connection (25) is perpendicular to a longitudinal central axis of the propellant channel at the propellant outlet connection (26) or on a plane receiving the latter.

6. Compressor arrangement according to any of the preceding claims, **characterised in that** the housing (27) can be secured by means of at least one screw (22), wherein a longitudinal central axis of a receiving opening (37) of the housing (27) for receiving the screw (22) is arranged parallel to a longitudinal central axis of the propellant channel at the propellant inlet connection (25) and/or a longitudinal central axis of the propellant channel at the propellant outlet connection (26).

7. Method for operating a compressor arrangement (1) for an internal combustion engine (2), in particular a compressor arrangement (1) according to one or more of the preceding claims, wherein the compressor arrangement (1) has a compressor arranged in a compressor housing (19) and having a low-pressure side (6) and a high-pressure side (7) and a negative pressure supply device (9) which has a propellant channel with a nozzle which is fluidically connected on the one hand via a propellant inlet connection (25) to the high-pressure side (7) of the compressor (5) and on the other hand via a propellant outlet connection (26) to the low-pressure side (6) of the compressor (5) and a negative pressure channel which opens fluidically into the propellant channel between the propellant inlet connection (25) and the propellant outlet connection (26), wherein the propellant channel is formed in a housing (27) separate from the compressor housing (19), on which the propellant inlet connection (25) is formed with a first connection (23) and the propellant outlet connection (26) is formed with a second connection (24), wherein the first connection (23) and the second connection (24) are formed on the compressor housing (19), wherein the housing (27) is formed for direct attachment to the compressor housing (19), wherein the propellant outlet connection (26) has a plug-in projection (28) and the second connection (24) has a plug-in connection receiver (29) for receiving the plug-in conenction projection (28), and wherein the propellant inlet connection (25) and the first connection (23) each have a through opening passing through an abutment surface (30, 31), so that a flow connection can be established between the propellant inlet connection (25) and the first connection (23) by planar abutment of the abutment surfaces (30, 31) against one another, **characterised in that** only the propellant outlet connection (26) is designed as a plug-in connection, and **in that** a pressure is measured by means of a pressure sensor and if the pressure falls below or exceeds a limit value a leakage is detected by the pressure.

## Revendications

1. Agencement de compresseur (1) pour un moteur à combustion interne (2), avec un compresseur (5) disposé dans un carter de compresseur (19) et présentant un côté basse pression (6) et un côté haute pression (7), et avec un dispositif de production de dépression (9), qui présente un canal d'agent propulseur avec une buse raccordé fluidiquement d'une part au côté haute pression (7) du compresseur (5) par un raccord d'entrée d'agent propulseur (25) et d'autre part au côté basse pression (6) du compresseur (5) par un raccord de sortie d'agent propulseur (26), et un canal de dépression débouchant dans le canal d'agent propulseur entre le raccord d'entrée d'agent propulseur (25) et le raccord de sortie d'agent propulseur (26), dans lequel le canal d'agent propulseur est formé dans un boîtier (27) séparé du carter de compresseur (19), sur lequel le raccord d'entrée d'agent propulseur (25) est formé avec un premier raccord (23) et le raccord de sortie d'agent propulseur (26) avec un second raccord (24), dans lequel le premier raccord (23) et le second raccord (24) sont formés sur le carter de compresseur (19), dans lequel le boîtier (27) est conçu pour être fixé directement sur le carter de compresseur (19), dans lequel le raccord de sortie d'agent propulseur (26) présente une saillie de connexion enfichable (28) et le second raccord (24) présente un logement de connexion enfichable (29) pour recevoir la saillie de connexion enfichable (28), et dans lequel le raccord d'entrée d'agent propulseur (25) et le premier raccord (23) présentent chacun une ouverture de passage traversant une surface d'appui (30, 31), de sorte qu'une liaison d'écoulement peut être établie entre le raccord d'entrée d'agent propulseur (25) et le premier raccord (23) par application plane des surfaces d'appui (30, 31) l'une contre l'autre, **caractérisé en ce que** seul le raccord de sortie d'agent propulseur (26) est conçu sous forme de raccord enfichable.

2. Agencement de compresseur selon la revendication 1, **caractérisé en ce que** le raccord d'entrée d'agent propulseur (25) présente un joint annulaire axial (42) coopérant avec le premier raccord (23) et le raccord de sortie d'agent moteur (26) présente un joint annulaire radial (43) coopérant avec le second raccord (24).

3. Agencement de compresseur selon l'une quelconque des revendications précédentes, **caractérisé en ce que** le canal d'agent propulseur présente un renvoi à l'intérieur du boîtier (27).

4. Agencement de compresseur selon la revendication 3, **caractérisé en ce que** le renvoi est conçu au moyen d'un couvercle (33) du boîtier (27) délimitant par zones le canal d'agent propulseur.

5. Agencement de compresseur selon l'une quelconque des revendications précédentes, **caractérisé en ce qu'**un axe central longitudinal du canal d'agent propulseur au niveau du raccord d'entrée d'agent propulseur (25) est perpendiculaire à un axe central longitudinal du canal d'agent propulseur au niveau du raccord de sortie d'agent propulseur (26) ou à un plan recevant celui-ci.

6. Agencement de compresseur selon l'une quelconque des revendications précédentes, **caractérisé en ce que** le boîtier (27) peut être fixé au moyen d'au moins une vis (22), dans lequel un axe central longitudinal d'une ouverture de réception (37) du boîtier (27) pour recevoir la vis (22) est disposé parallèlement à un axe central longitudinal du canal d'agent propulseur sur le raccord d'entrée d'agent propulseur (25) et/ou à un axe central longitudinal du canal d'agent propulseur sur le raccord de sortie d'agent propulseur (26).

7. Procédé de fonctionnement d'un agencement de compresseur (1) pour un moteur à combustion interne (2), en particulier un agencement de compresseur (1) selon une ou plusieurs des revendications précédentes, dans lequel l'agencement de compresseur (1) dispose d'un compresseur disposé dans un boîtier de compresseur (19) et présentant un côté basse pression (6) et un côté haute pression (7), et d'un dispositif de production de dépression (9), qui présente un canal d'agent propulseur avec une buse raccordé fluidiquement d'une part au côté haute pression (7) du compresseur (5) par un raccord d'entrée d'agent propulseur (25) et d'autre part au côté basse pression (6) du compresseur (5) par un raccord de sortie d'agent propulseur (26), et un canal de dépression débouchant dans le canal d'agent propulseur entre le raccord d'entrée d'agent propulseur (25) et le raccord de sortie d'agent propulseur (26), dans lequel le canal d'agent propulseur est formé dans un boîtier (27) séparé du carter de compresseur (19), sur lequel le raccord d'entrée d'agent propulseur (25) est formé avec un premier raccord (23) et le raccord de sortie d'agent propulseur (26) avec un second raccord (24), dans lequel le premier raccord (23) et le second raccord (24) sont formés sur le carter de compresseur (19), dans lequel le boîtier (27) est conçu pour être fixé directement sur le carter de compresseur (19), dans lequel le raccord de sortie d'agent propulseur (26) présente une saillie de connexion enfichable (28) et le second raccord (24) présente un logement de connexion enfichable (29) pour recevoir la saillie de connexion enfichable (28), et dans lequel le raccord d'entrée d'agent propulseur (25) et le premier raccord (23) présentent chacun une ouverture de passage traversant une surface d'appui (30, 31), de sorte qu'une liaison d'écoulement peut être établie entre le raccord d'entrée d'agent propulseur (25) et le premier raccord (23) par application plane des surfaces d'appui (30, 31) l'une contre l'autre, **caractérisé en ce que** seul le raccord de sortie d'agent propulseur (26) est conçu sous forme de raccord enfichable et **en ce qu'**une pression est mesurée au moyen d'un capteur de pression et une fuite est détectée en cas de sous-dépassement ou de dépassement d'une valeur limite par la pression.
